# FASCICULE DE BREVET EUROPEEN

(11) **EP 0 554 174 B1**
(45) Date de publication et mention de la délivrance du brevet: **12.04.2000**
(21) Numéro de dépôt: 93400205.6
(22) Date de dépôt: 28.01.1993
(51) Int. Cl.: C08K 3/34, C08L 27/06

(54) **Composition à base de poly(chlorure de vinyle), de polymère fluoré et de talc, utilisable, notamment, comme isolant pour câbles électriques, et procédé de préparation**
Zusammensetzung auf Grundlage von Polyvinylchlorid, Fluorpolymer und Talk, vor allem verwendbar als Isolator für elektrische Kabel sowie Herstellungsverfahren
Composition based on polyvinyl chloride, fluoropolymer and talc, useful in particular as an insulator for electric cables and process of preparation

(30) Priorité: 31.01.1992 FR 9201070
(43) Date de publication de la demande: 04.08.1993
(73) Titulaire: S.A. SYLEA, F-78180 Montigny le Bretonneux (FR)
(72) Inventeur: Jean, Daniel, F-31200 Toulouse (FR); Devauchelle, Guillaume, F-78180 Montigny le Bretonneux (FR); Alunni, Jean, F-82600 Verdun sur Garonne (FR)
(74) Mandataire: Sauvage, Renée

(56) Documents cités:
- EP-A- 0 089 589
- EP-A- 0 113 114
- DE-B- 1 286 302
- FR-A- 2 265 818

## Description

La présente invention concerne une composition à base de poly(chlorure de vinyle), en abrégé PVC, trouvant notamment son application dans la fabrication des gaines isolantes pour câbles électriques et des composants utilisés dans la fabrication des faisceaux électriques. Elle vise également le procédé de fabrication de cette composition et les articles obtenus.

Il est connu d'utiliser le PVC comme isolant de câbles électriques employés dans l'industrie automobile, l'électroménager, le bâtiment, les télécommunications ainsi que dans la fabrication, en tout ou partie, de goulottes, rubans, passe-fils et surmoulages. La tenue en température de ce polymère limite cependant ses applications à celles dans lesquelles il n'est pas soumis à des températures excédant environ 110°C. Or, il existe une demande importante en composants de câblage dont la tenue en température serait de 125°C, ce qui correspond, dans l'industrie automobile, à la classe T3 des câbles électriques.

Pour la plupart des applications précitées, le coût des composants doit rester bas et le matériau doit être auto-extinguible. Le PVC présentant ces qualités de faible coût et d'auto-extinguibilité, différentes tentatives ont été faites pour augmenter sa tenue en température. C'est ainsi qu'on a essayé d'augmenter son poids moléculaire et que des résines de haut K-wert (90 au lieu de 70) ont été créées. Des plastifiants peu volatils, comme les trimellitates, et des stabilisants très performants, comme les sulfates tétrabasiques, ont été employés. Aucune de ces tentatives n'ayant cependant abouti, il a été proposé de réticuler le PVC, ce qui a pu conduire, dans certains cas, à des résultats relativement satisfaisants.

Pour obtenir une bonne réticulation, il a fallu copolymériser un composé présentant des motifs époxy avec le chlorure de vinyle monomère, puis greffer des motifs silane sur le copolymère obtenu. Outre qu'il est relativement coûteux à obtenir, le copolymère réticulé résultant présente de nouveaux inconvénients :
- au niveau de sa fabrication, il existe un risque de réticulation avant et pendant l'extrusion,
- au niveau du produit lui-même :
   . sa coloration de base est jaune, de sorte qu'il n'est pas possible d'obtenir tous les coloris désirés,
   . il n'est pas davantage possible d'en récupérer les déchets par simple fusion.

La présente invention a pour but de proposer une autre solution qui confère au PVC les propriétés attendues de tenue en température, sans pour autant ni augmenter inconsidérément son prix de revient, ni lui donner de nouvelles caractéristiques gênantes.

Il est connu d'employer de la poudre de polytétrafluoroéthylène (PTFE) pour améliorer, non pas la tenue en température, mais la lubrification et la tenue à l'abrasion de certains thermoplastiques, tels que les polyacétals. Les quantités employées sont importantes, de l'ordre de 15 à 30 % en poids. Le prix de vente de la poudre de PTFE étant, à l'heure actuelle, de l'ordre de FF 150,00/kg, cette technique conduit à l'obtention de matériaux coûteux réservés à des applications sophistiquées. Lorsque l'on sait que, de leur côté, les compositions classiques à base de PVC sont vendues approximativement à FF 8,00/kg, l'incorporation de poudre de PTFE à ces compositions dans les conditions connues, déboucherait sur des coûts totalement incompatibles avec les applications considérées. Le document DE-B-1 286 302 propose lui aussi d'inclure une résine de PTFE, sous forme de particules fibreuses, à un polymère thermoplastique, tel qu'un poly(halogénure de vinyle). Le but poursuivi est d'augmenter la viscosité et l'élasticité du polymère et, là encore, il ne s'agit pas d'augmenter la tenue en température du PVC.

Par ailleurs, il est connu de EP-A-0 089 589 d'ajouter du talc à une composition plastifiée à base de poly(chlorure de vinyle) en vue d'augmenter la lubrification de l'isolant qui peut être fabriqué à partir de ladite composition.

Or, il a été constaté que des proportions faibles de polymère fluoré, combinées à du talc, ne jouant que peu sur le prix du produit résultant, suffisent à donner à la composition de PVC une tenue en température largement améliorée, permettant son utilisation à 125°C en continu ou à une température pouvant atteindre 175°C pendant 120 heures.

Ainsi, donc, l'invention propose une nouvelle composition à base de poly(chlorure de vinyle) qui se caractérise en ce qu'elle renferme au moins 3 parties en poids de polymère fluoré et au moins 10 parties de talc, pour 100 parties en poids de poly(chlorure de vinyle).

De préférence, la composition renferme de 3 à 8 parties en poids de polymère fluoré et de 10 à 30 parties en poids de talc, pour 100 parties en poids de poly(chlorure de vinyle).

A titre d'exemple, un mélange de PVC plastifié contenant 4 parties en poids de poudre de polytétrafluoroéthylène (PTFE) micronisée, c'est-à-dire ayant une taille de particules de l'ordre du micromètre, et 16 parties en poids de talc, pour 100 parties en poids de poly(chlorure de vinyle) a une tenue en température de 300 minutes à 200°C (c'est-à-dire qu'il résiste à la dégradation pendant cette durée à cette température) alors que le même PVC plastifié, non mélangé à de la poudre de PTFE et à du talc ne résiste que 200 minutes à 200°C.

Après un vieillissement accéléré à 155°C pendant 10 jours d'un isolant fabriqué à partir de la composition PVC/PTFE/talc indiquée ci-dessus, ses propriétés mécaniques restent quasiment inchangées (ce vieillissement accéléré correspond à une utilisation à 125°C en continu).

La limite inférieure de 3 parties de polymère fluoré et de 10 parties de talc pour 100 parties de PVC est celle à partir de laquelle une amélioration sensible de la tenue en température est observée par rapport à une formulation classique de PVC haute température (c'est-à-dire supportant 105°C en continu et 125°C en pointe). La limite supérieure choisie, dans la gamme indiquée plus haut, pour le polymère fluoré et le talc est fonction du coût acceptable pour la composition et des performances désirées. Les polymères fluorés susceptibles d'être utilisés selon l'invention peuvent être notamment le polytétrafluoroéthylène (commercialisé sous la marque Téflon), le copolymère éthylène-tétrafluoroéthylène (en abrégé ETFE, commercialisé sous la marque Tefzel) ou le polymère dit "perfluoroalcoxy" (commercialisé sous la marque Téflon AF).

De préférence, le polymère fluoré se présente sous forme de poudre micronisée d'une granulométrie initiale de 0,2 micron, d'une granulométrie finale agglomérée de 8 à 12 microns et d'une surface spécifique de 5 à 10 m²/g.

Les talcs susceptibles d'être utilisés selon l'invention doivent être les plus talqueux possibles et d'une granulométrie maximale de 15 microns (il peut s'agir, par exemple, du produit commercialisé sous la marque Steamic OOS par Les Talcs de Luzenac). Comme le polymère fluoré, ils doivent être incorporés sous forme de poudre micronisée.

Les PVC employés ont généralement des K-wert compris entre 70 et 100.

Ils sont plastifiés à l'aide de plastifiants à faible volatilité (0,3 % maximum à 180°C) et dont la tension de vapeur à 200°C est inférieure à 0,1 mbar. Ce sont des trimellitates d'alcools linéaires à longue channe de carbone C8-C10 ou C9-C10.

Les compositions sont le plus souvent stabilisées à l'aide de stabilisants contenant du plomb.

L'addition de polymère fluoré, même en faibles quantités, et de talc à des compositions à base de PVC améliore, outre leurs propriétés mécaniques et leur tenue à l'abrasion, considérablement leur tenue à des températures élevées pour ce matériau.

De plus, l'addition de polymère fluoré et de talc augmente considérablement le point de ramollissement de ces compositions qui monte à 170-190°C suivant les K-wert utilisés (TMA^{**1**} force 0,2N). Cette propriété est d'autant plus intéressante qu'elle confère, aux articles confectionnés avec ces compositions, une bonne tenue au fluage à chaud, notamment dans le comportement moteur des véhicules.
^{**1**} : Analyse thermo-mécanique : analyse consistant à définir le point de ramollissement d'un matériau amorphe ou cristallin en utilisant une canne de verre sous une charge constante (dans ce cas, 0,2 N) et en faisant évoluer la température (dans ce cas, de 25 à 200°C). L'inclinaison de la courbe donne la température de ramollissement et le pourcentage de pénétration à ladite température.

L'adjonction du polymère fluoré et du talc dans un mélange à base de poly(chlorure de vinyle), en présence d'un stabilisant à base de plomb confère, en outre, auxdits articles, une très bonne tenue à froid (un câble revêtu d'une gaine isolante formée d'une composition selon l'invention supporte un enroulement à -50°C sans craquelure de ladite gaine).

L'invention est illustrée ci-après par quatre exemples de composition non limitatifs et par la relation de leurs propriétés.

### EXEMPLE 1

La composition est préparée de façon à réaliser un mélange sec de tous les ingrédients et en fondant ce mélange dans un mélangeur bi-vis pour obtenir des granulés :

| | |
|---|---|
| PVC (suspension) K-wert 70 | 150 kg |
| Trimellitate d'alcools linéaires en C9-C10 | 75 kg |
| Stabilisant au plomb | 18 kg |
| Talc | 25 kg |
| PTFE (poudre micronisée) | 10 kg. |

*Essais* : on a revêtu d'une gaine isolante formée de cette composition un câble électrique de 0,6 mm² de section et on lui a ensuite fait subir un vieillissement de 240 heures à 155°C correspondant à une température d'utilisation de 125°C en continu, plus 240 heures supplémentaires également à 155°C.

Les résultats sont rapportés ci-après :

| Propriétés | Etat initial | Après 240 h de vieillissement | Après 480 h de vieillissement |
|---|---|---|---|
| Stabilité à 200°C | 300 mn | 133 mn | 23 mn |
| Résistance à la rupture en N/mm | 23,7 | 24,5 | 23,8 |
| Allongement en % | 309 | 235 | 172 |
| Point de ramollissement en °C | 170,2 | | |
| TMA 0,2N Pénétration en % | 12,8 | | |

Abrasion sous 700g en nombre de cycles^{**2**} : >3000 Abrasion fil/fil sous 1,5 kg en nombre de cycles^{**3**} : >10 000
^{**2**} : l'essai d'abrasion consiste à frotter l'isolant avec une lame métallique jusqu'à ce que l'abrasion soit telle qu'il y ait contact métallique avec l'âme du câble et court-circuit.
^{**3**} : l'essai est fait selon le même principe que l'essai ^{**2**} mais avec deux câbles dont l'un est tenu sous 1,5 kg.

### EXEMPLE 2

La composition est réalisée de la même façon que celle de l'exemple 1.

| | |
|---|---|
| PVC (suspension) K-wert 70 | 150 kg |
| Trimellitate d'alcools linéaires en C9-C10 | 55 kg |
| Stabilisant au plomb | 18 kg |
| Talc | 25 kg |
| PTFE (poudre micronisée) | 6 kg. |

Les essais sont réalisés de la même façon qu'à l'exemple 1 et les résultats sont rapportés ci-dessous :

| Propriétés | Etat initial | Après 240 h de vieillissement | Après 480 h de vieillissement |
|---|---|---|---|
| Stabilité à 200°C | 300 mn | 140 mn | 77 mn |
| Résistance à la rupture en N/mm | 29,1 | 30,5 | 30,7 |
| Allongement en % | 263 | 266 | 190 |
| Point de ramollissement en °C | 178,2 | | |
| TMA 0,2N Pénétration en % | 10,4 | | |

Abrasion sous 700g en nombre de cycles: >10 000

Abrasion fil/fil sous 1,5 kg en nombre de cycles : >15 000

### EXEMPLE 3

La composition est réalisée de la même façon que celle des exemples précédents.

| | |
|---|---|
| PVC (suspension) K-wert 80 | 150 kg |
| Trimellitate d'alcools linéaires en C9-C10 | 75 kg |
| Stabilisant au plomb | 18 kg |
| Talc | 20 kg |
| PTFE (poudre micronisée) | 8 kg. |

Les essais sont réalisés de la même façon qu'aux exemples précédents et les résultats sont rapportés ci-dessous :

| Propriétés | Etat initial | Après 240 h de vieillissement | Après 480 h de vieillissement |
|---|---|---|---|
| Stabilité à 200°C | 360 mn | 180 mn | 90 mn |
| Résistance à la rupture en N/mm | 23,3 | 24,3 | 24,9 |
| Allongement en % | 290 | 253 | 200 |
| Point de | 181,4 | | |
| ramollissement en °C | | | |
| TMA 0,2N Pénétration en % | 11 | | |

Abrasion sous 700g en nombre de cycles: >5 000

Abrasion fil/fil sous 1,5 kg en nombre de cycles : >15 000

La composition préparée selon le présent exemple a également été soumise à un vieillissement thermique de 120 heures à 175°C. Les résultats sont rapportés ci-après :

| Propriétés | Etat initial | Après 120 h de vieillissement |
|---|---|---|
| Stabilité à 200°C | 360 mn | 30 mn |
| Résistance à la rupture en N/mm | 23,3 | 25,1 |
| Allongement en % | 290 | 185 |

### EXEMPLE 4

La composition est réalisée de la même façon que celle des exemples précédents.

| | |
|---|---|
| PVC (suspension) K-wert 92 | 150 kg |
| Trimellitate d'alcools linéaires en C9-C10 | 65 kg |
| Stabilisant au plomb | 18 kg |
| Talc | 40 kg |
| PTFE (poudre micronisée) | 8 kg. |

Les essais sont réalisés de la même façon qu'aux exemples précédents et les résultats sont rapportés ci-dessous :

| Propriétés | Etat initial | Après 240 h de vieillissement | Après 480 h de vieillissement |
|---|---|---|---|
| Stabilité à 200°C | 360 mn | 190 mn | 90 mn |
| Résistance à la rupture en N/mm | 30,2 | 31,4 | 32,1 |
| Allongement en % | 255 | 233 | 195 |
| Point de ramollissement en °C | 189,6 | | |
| TMA 0,2N Pénétration en % | 11 | | |

Abrasion sous 700g en nombre de cycles: >10 000

Abrasion fil/fil sous 1,5 kg en nombre de cycles : >15 000

Il est à noter qu'après les vieillissements, les isolants préparés à partir des compositions selon les exemples 1 à 4 ci-dessus résistent à l'enroulement à -25°C.

## Revendications

1. Composition à base de poly(chlorure de vinyle) utilisable, en particulier, comme isolant de câbles électriques, caractérisée en ce qu'elle renferme au moins 3 parties en poids de polymère fluoré et au moins 10 parties en poids de talc pour 100 parties en poids de poly(chlorure de vinyle).

2. Composition selon la revendication 1, caractérisée en ce qu'elle renferme de 3 à 8 parties en poids de polymère fluoré pour 100 parties en poids de poly(chlorure de vinyle).

3. Composition selon la revendication 1 ou 2, caractérisée en ce qu'elle renferme de 10 à 30 parties en poids de talc pour 100 parties en poids de poly(chlorure de vinyle).

4. Composition selon l'une quelconque des revendications 1 à 3, caractérisée en ce que le poly(chlorure de vinyle) a un K-wert compris entre 70 et 100.

5. Composition selon l'une quelconque des revendications 1 à 4, caractérisée en ce que le poly(chlorure de vinyle) renferme au moins un plastifiant ayant une tension de vapeur à 200°C inférieure à 0,1 mbar.

6. Composition selon l'une quelconque des revendications 1 à 5, caractérisée en ce qu'elle renferme un stabilisant à base de plomb.

7. Procédé de préparation de la composition selon l'une quelconque des revendications 1 à 6, caractérisé en ce qu'il consiste à incorporer dans un poly(chlorure de vinyle) plastifié et sec au moins 3 parties en poids de polymère fluoré et au moins 10 parties en poids de talc pour 100 parties en poids de poly(chlorure de vinyle).

8. Procédé selon la revendication 7, caractérisé en ce qu'il consiste à incorporer dans le poly(chlorure de vinyle) plastifié et sec de 3 à 8 parties en poids de polymère fluoré et de 10 à 30 parties en poids de talc pour 100 parties en poids de poly(chlorure de vinyle).

9. Procédé selon la revendication 7 ou 8, caractérisé en ce que le polymère fluoré et le talc sont ajoutés sous forme de poudres micronisées.

10. Câble électrique isolé à l'aide d'une gaine formée à partir de la composition selon l'une quelconque des revendications 1 à 6.

11. Composant de faisceau électrique, tel que gaine de protection, goulotte, ruban, surmoulage et passe-fils, caractérisé en ce qu'il est formé à partir de la composition selon l'une quelconque des revendications 1 à 6.

## Claims

1. Poly(vinyl chloride)-based composition for use, in particular, for insulating electrical cables, characterized in that it includes at least 3 parts by weight of a fluorinated polymer and at least 10 parts by weight of talcum for 100 parts by weight of poly(vinyl chloride).

2. Composition as claimed in claim 1, characterized in that it includes from 3 to 8 parts by weight of a fluorinated polymer for 100 parts by weight of poly(vinyl chloride).

3. Composition as claimed in claim 1 or 2, characterized in that it includes from 10 to 30 by weight of talcum for 100 parts by weight of poly(vinyl chloride).

4. Composition as claimed in any one of claims 1 to 3, characterized in that the poly(vinyl chloride) has a K-wert in the range of 70 to 100.

5. Composition according to any one of claims 1 to 4, characterized in that the poly(vinyl chloride) includes at least a plasticizer having a vapor tension at 200°C less than 0.1 mbar.

6. Composition as claimed in any one of claims 1 to 5, characterized in that it includes a lead-based stabilizer.

7. Process for the preparation of the composition according to any one of claims 1 to 6, characterized in that it consists in incorporating, in a plasticized and dry poly(vinyl chloride), at least 3 parts by weight of a fluorinated polymer and at least 10 parts by weight of talcum for 100 parts by weight of poly(vinyl chloride).

8. Process according to claim 7, characterized in that it consists in incorporating, in the plasticized and dry poly(vinyl chloride), from 3 to 8 parts by weight of a fluorinated polymer and from 10 to 30 by weight of talcum for 100 parts by weight of poly(vinyl chloride).

9. Process according to claim 7 or 8, characterized in that the fluorinated polymer and the talcum are added as micronized powders.

10. Electrical cable insulated with a sheath made from the composition according to any one of claims 1 to 6.

11. Electrical loom component, such as protecting sheath, spout, tape, potting and grommet, characterized in that it is made from the composition according to any one of claims 1 to 6.

## Patentansprüche

1. Zusammensetzung auf der Grundlage von Polyvinylchlorid, die insbesondere als Isoliermaterial für elektrische Kabel verwendbar ist, dadurch gekennzeichnet, daß sie mindestens 3 Gewichtsteile Fluorpolymer und mindestens 10 Gewichtsteile Talk auf 100 Gewichtsteilen Polyvinylchlorid enthält.

2. Zusammensetzung nach Anspruch 1, dadurch gekennzeichnet, daß sie 3 bis 8 Gewichtsteile Fluorpolymer auf 100 Gewichtsteilen Polyvinylchlorid enthält.

3. Zusammensetzung nach Anspruch 1 oder 2, dadurch gekennzeichnet, daß sie 10 bis 30 Gewichtsteile Talk auf 100 Gewichtsteilen Polyvinylchlorid enthält.

4. Zusammensetzung nach einem der Ansprüche 1 bis 3, dadurch gekennzeichnet, daß das Polyvinylchlorid einen K-Wert zwischen 70 und 100 hat.

5. Zusammensetzung nach einem der Ansprüche 1 bis 4, dadurch gekennzeichnet, daß das Polyvinylchlorid mindestens einen Weichmacher mit einer Dampfspannung von unter 0,1 mbar bei 200°C enthält.

6. Zusammensetzung nach einem der Ansprüche 1 bis 5, dadurch gekennzeichnet, daß sie einen Stabilisator auf der Grundlage von Blei enthält.

7. Verfahren zur Herstellung der Zusammensetzung nach einem der Ansprüche 1 bis 6, dadurch gekennzeichnet, daß man in ein weichmacherhaltiges und trockenes Polyvinylchlorid mindestens 3 Gewichtsteile Fluorpolymer und mindestens 10 Gewichtsteile Talk auf 100 Gewichtsteilen Polyvinylchlorid einführt.

8. Verfahren nach Anspruch 7, dadurch gekennzeichnet, daß man in ein weichmacherhaltiges und trockenes Polyvinylchlorid 3 bis 8 Gewichtsteile Fluorpolymer und 10 bis 30 Gewichtsteile Talk auf 100 Gewichtsteilen Polyvinylchlorid einführt.

9. Verfahren nach Anspruch 7 oder 8, dadurch gekennzeichnet, daß das Fluorpolymer und der Talk in Form von mikronisierten Pulvern beigegeben werden.

10. Elektrisches Kabel, das mit Hilfe eines Mantels isoliert ist, der aus der Zusammensetzung nach einem der Ansprüche 1 bis 6 gebildet ist.

11. Elektrisches Bündelelement wie Schutzhülle, Kanal, Band, Aufformung und Drahtdurchführung, dadurch gekennzeichnet, daß es aus der Zusammensetzung nach einem der Ansprüche 1 bis 6 gebildet ist.
